(19) **Europäisches Patentamt / European Patent Office / Office européen des brevets**

(11) **EP 1 807 720 B1**

(12) **EUROPÄISCHE PATENTSCHRIFT**

(45) Veröffentlichungstag und Bekanntmachung des Hinweises auf die Patenterteilung:
**15.09.2010   Patentblatt 2010/37**

(21) Anmeldenummer: **06775707.0**

(22) Anmeldetag: **17.07.2006**

(51) Int Cl.:
*G02B 6/00* (2006.01)        *F21V 8/00* (2006.01)

(86) Internationale Anmeldenummer:
**PCT/DE2006/001250**

(87) Internationale Veröffentlichungsnummer:
**WO 2007/012306 (01.02.2007 Gazette 2007/05)**

(54) **SCHILDANORDNUNG MIT BELEUCHTUNGSEINRICHTUNG UND EINEM REFLEKTIERENDEN SCHILD**

ILLUMINATED SIGN ARRANGEMENT COMPRISING AN ILLUMINATION DEVICE AND A REFLECTIVE SIGN

DISPOSITIF DE SIGNALISATION LUMINEUSE COMPORTANT UN DISPOSITIF D'ECLAIRAGE ET UNE PLAQUE REFLECHISSANTE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.07.2005   DE 102005035232**

(43) Veröffentlichungstag der Anmeldung:
**18.07.2007   Patentblatt 2007/29**

(60) Teilanmeldung:
**07105393.8 / 1 818 698**

(73) Patentinhaber: **Erich Utsch AG**
**57080 Siegen (DE)**

(72) Erfinder:
• **BILGER, Wolfgang**
  **57074 Siegen (DE)**
• **WURMBACH, Lothar**
  **57074 Siegen (DE)**
• **PFUNDSTEIN, Bernd**
  **35630 Ehringshausen (DE)**

(74) Vertreter: **Vorberg, Jens et al**
**Bauer Vorberg Kayser**
**Patentanwälte**
**Goltsteinstrasse 87**
**50968 Köln (DE)**

(56) Entgegenhaltungen:
EP-A- 0 809 225            EP-A1- 0 950 851
WO-A-01/16223            JP-A- 2004 062 139
US-A1- 2002 015 314    US-A1- 2003 174 865
US-A1- 2004 066 659    US-A1- 2004 241 393
US-A1- 2005 019 701    US-A1- 2005 036 083

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der vorliegenden Erfindung ist eine Beleuchtungseinrichtung für ein retroreflektierendes Schild mit einer Legende sowie eine Schildanordnung bestehend aus einem retroreflektierenden Schild mit einer Legende und einer Beleuchtungseinrichtung, wobei die Beleuchtungseinrichtung einen flächenhaft ausgedehnten Lichtleiter umfasst, der vorderseitig des auszuleuchtenden retroreflektierenden Schilds angeordnet und dazu vorgesehen ist, das retroreflektierende Schild durch Auskopplung von im Lichtleiter geführtem Licht homogen auszuleuchten, ohne die Retroreflexion stark zu reduzieren.

Weiter ist Gegenstand der vorliegenden Erfindung ein Halter für ein Kfz-Kennzeichenschild, welcher eine erfindungsgemäße Beleuchtungseinrichtung umfasst, die zusammen mit dem zu haltenden Kfz-Kennzeichenschild eine erfindungsgemäße Schildanordnung ausbildet. Der Halter bildet ein geschlossenes Gehäuse aus, im dem die Beleuchtungseinrichtung angeordnet ist. Das geschlossene Gehäuse ist zur Aufnahme eines retroreflektierenden Kfz-Kennzeichenschildes vorgesehen, wobei es sich bei dem Kfz-Kennzeichenschild insbesondere um ein Kfz-Kennzeichenschild mit geprägter metallischer Platine, wie es beispielsweise in Deutschland gesetzlich vorgeschrieben ist, handeln kann.

Aus dem Stand der Technik ist ein gattungsgemäßer Halter für ein Kfz-Kennzeichenschild bekannt, welcher eine integrierte Beleuchtungseinrichtung zur Beleuchtung der Legende des gehaltenen Kfz-Kennzeichenschildes aufweist. Aus der DE 102 58 465 A1 der Toyoda Gosei Co. Ltd., Japan, ist eine Beleuchtungsvorrichtung bekannt, die in einer Ausführungsform einen gattungsgemäßen Halter für ein Kfz-Kennzeichenschild ausbildet, welches aufgrund gesetzlicher Bestimmungen in Japan nicht retroreflektierend ist. Als zweite Ausführungsform offenbart diese Patentanmeldung einen Kfz-Kennzeichenhalter, der ein geschlossenes Gehäuse ausbildet, in welchem ein zu haltendes und zu beleuchtendes Kfz-Kenn-zeichenschild angeordnet werden kann. Vorderseitig vor dem gehaltenen Kfz-Kennzeichenschild ist ein flächenhaft ausgedehnter Lichtleiter angeordnet, in den von einer Seitenfläche ausgehend mittels einer Mehrzahl von Lichtquellen Licht eingekoppelt wird. Vorderseitig ist der Lichtleiter mit einer Lichtauskoppelschicht versehen, die einer gezielten homogenen Auskopplung des im Lichtleiter unter Ausnutzung des Effekts der internen Totalreflektion geführten Lichts dient.

Nachteilig an dem aus der DE 102 58 465 A1 bekannten Halter für ein Kfz-Kennzeichenschild ist jedoch, dass das vom Halter ausgebildete Gehäuse nur ungenügend gegen Witterungseinflüsse abgedichtet ist, wie sie typisch bei der praktischen Verwendung eines gattungsgemäßen Halters auftreten. Auch ist die Vorderfläche des Gehäuses, in welchem das Kfz-Kennzeichenschild und die Beleuchtungseinrichtung angeordnet sind, und welche von der Lichtauskoppelschicht gebildet wird, nur ungenügend gegen Beschädigung gesichert, so dass beim Auftreten einer mechanischen Beschädigung dieser Vorderfläche eine unerwünschte stark inhomogene Lichtauskopplung aus der Vorderfläche auftreten kann.

Insbesondere ist jedoch der aus der DE 102 58 465 A1 bekannte Halter nicht dazu vorgesehen, ein retroreflektierendes Schild, insbesondere Krz-Kennzeichenschild, so zu halten und auszuleuchten, dass

1. eine ausreichende Retroreflektivität des gehaltenen Schilds unter allen Umständen sichergestellt ist,
2. das gehaltene Schild von der integrierten Beleuchtungseinrichtung unter allen Umständen so ausgeleuchtet wird, dass es ohne Fremdbeleuchtung ausreichend gut abzulesen ist.

Grundsätzlich ist aus dem Stand der Technik die Verwendung retroreflektierender Kfz-Kennzeichenschilder bekannt. Beispielhaft hierfür seien die Dokumente WO 01/16223 A, US 2004/241393 A1, EP 0 809 225 A1 sowie US 2003/174865 A1 genannt.

Aus der US 2004/0066659 A1 ist ein abgeflachter, z.B. ringförmiger oder linear ausgedehnter Lichtleiter bekannt, dessen Oberfläche mit vertieften Strukturen für eine gezielte Lichtauskopplung versehen ist. Der Lichtleiter ist insbesondere für eine Ausleuchtung von LCD-Displays oder Werbeschlidern vorgesehen.

Aus der US 2005/0036083 A1 ist ein flächenhaft ausgedehnter Lichtleiter bekannt, der zur Ausleuchtung eines LCD-Displays vorgesehen ist. Der Lichtleiter umfasst Lichtauskoppelstrukturen, die in einer Oberfläche des Lichtleiters ausgebildet sind.

Aufgabe der vorliegenden Erfindung ist es daher, eine Schildanordnung bestehend aus einer Beleuchtungseinrichtung und einem retroreflektierenden Schild anzugeben, bei der das Schild stets ausreichend ausgeleuchtet ist und ein Mindestmaß an Retroreflektivität aufweist.

Gelöst wird diese Aufgabe durch eine eine Schildanordnung mit den Merkmalen des Anspruchs 1.

Eine erfindungsgemäße Schildanordung umfasst eine Beleuchtungseinrichtung für ein retroreflektierendes Schild mit einer Legende. Diese weist einen flächenhaft ausgedehnten Lichtleiter auf, der dazu vorgesehen ist, vorderseitig des auszuleuchtenden retroreflektierenden Schilds angeordnet zu werden, um das retroreflektierende Schild durch Auskopplung von im Lichtleiter geführtem Licht homogen auszuleuchten. Erfindungsgemäß ist die Beleuchtungseinrichtung so ausgestaltet, dass

• die durch die Ausleuchtung des retroreflektierenden Schilds erzielte Abstrahlung der Schildanordnung mindestens 2 Candela pro Quadratmeter beträgt, und
• die Retroreflektivität des retroreflektierenden Schilds durch die die Beleuchtungseinrichtung um maximal 60 %, bevorzugt um nicht mehr als 30% reduziert wird.

Erzielt wird dies durch eine gezielte Abstimmung der releventen Parameter der beleuchtungseinrichtung, die u.a. folgende umfassen:

- Lichtleitermaterial und - geometrie
- Anzahl, Anordnung und Lichtstärke der Lichtquellen,
- Ankopplung der Lichtquellen an den Lichtleiter,
- Auskoppelstärke des Lichtleiters, einschließlich deren räumlicher Verteilung,
- Transmission durch den Lichtleiter,
- Abschwächung des Kontrasts eines auszuleuchtenden retroreflektierenden Schilds.

Bevorzugt beträgt die Abstrahlung eines von einer erfindungsgemäßen Beleuchtungseinrichtung ausgeleuchteten Schilds zumindest 2,5 Candela pro Quadratmeter.

Weiterhin liegt die Verminderung der Retroreflektivität des retroreflektierenden Schilds durch die die Beleuchtungseinrichtung bevorzugt im Bereich von 5 bis 50 %, besonders bevorzugt ist ein Bereich von 1,5 bis 30 %.

Eine erfindungsgemäße Schildanordnung umfasst ein retroreflektierendes Schild mit einer Legende sowie eine Beleuchtungseinrichtung. Die Beleuchtungseinrichtung umfasst einen flächenhaft ausgedehnten Lichtleiter, der vorderseitig des auszuleuchtenden retroreflektierenden Schilds angeordnet ist. Der Lichtleiter ist dazu vorgesehen, das retroreflektierende Schild durch Auskopplung durch von im Lichtleiter geführtem Licht möglichst homogen auszuleuchten. Erfindungsgemäß ist nun die Beleuchtungseinrichtung so ausgestaltet, dass die durch die Ausleuchtung des retroreflektierenden Schilds erzielte Abstrahlung der Schildanordnung mindestens zwei Candela pro Quadratmeter beträgt. Bevorzug beträgt die Abstrahlung des ausgeleuchteten Schilds zumindest 2,5 Candela pro Quadratmeter.

Weiterhin ist die Beleuchtungseinrichtung so ausgestaltet, dass die Retroreflektivität der Schildanordnung mindestens 20 Candela pro Lux und Quadratmeter beträgt, bevorzugt über 25 Candela pro Lux und Quadratmeter und besonders bevorzugt über 30 Candela pro Lux und Quadratmeter.

Die genannte verbleibende Retroreflektivität sowie Ausleuchtung des retroreflektieren Schilds wird erzielt durch geeignete Wahl der bei der Charakterisierung der erfindungsgemäßen Beleuchtungseinrichtung genannten Parameter sowie zumindest der folgenden weiteren Parameter:

- Retroreflektivität des retroreflektierenden Schilds,
- Kontrast der Legende des retroreflektierenden Schilds

Die Erfindung basiert also zu wesentlichen Teilen auf der Erkenntnis, dass durch eine geeignete Abstimmung der vorgenannten Parameter aufeinander gezielt die erzielbare Leuchtstärke des auszuleuchtenden retroreflektierenden Schilds, die verbleibenden Retroreflexion sowie die Lesbarkeit der Legende des Schilds eingestellt werden können, um so insbeondere eine Verwendung der Beleuchtungseinrichtung und / oder der Schildanordnung für ein retroreflektierendes Kfz-Kennzeichenschild zu ermöglichen.

Die erfindung ist besonders geeignet für retroreflektierende Kfz-Kennzeichenschilder, jedoch ist sie nicht darauf beschränkt. Vielmehr ist die Erfindung grundsätzlich zur Verwendung mit allen Arten von retroreflektierenden Schildern geeignet, die mittels einer externen Lichtquelle ausgeleuchtet werden sollen. Beispielhaft hierfür seien Verkehrsleitschilder, Werbeschilder im öffentlichen Raum oder auch Anzeige- oder Werbeeinrichtungen auf Kraftfahrzeugen wie Bussen, Bahnen oder Lastkraftwagen genannt.

Im Zusammenhang mit retroreflektierenden Kfz-Kennzeichenschildern kann die erfindungsgemäße Beleuchtungseinrichtung mit allen Arten von Kennzeichenschildern verwendet werden, z.B. mit Kennzeichenschildern mit oder ohne geprägter Legende oder mit einer Legende, die im sog. Semi-shear-verfahren erzeugt wurde. Die Kennzeichenplatine kann z.B aus einem Metall wie Weissblech oder Aluminium oder aus einem Kunststoff bestehen.

Als besonders geeignete Lichtquellen haben sich weiße Leuchtdioden erwiesen, die zum Zeitpunkt der Anmeldung bereits in großen Stückzahlen kostengünstig mit einer Lichtleistung von 3.000 und darüber Millicandela verfügbar sind. Bei der genannten Lichtleistung ist die Verwendung von 5 bis 40 derartiger Leuchtdioden vorteilhaft, wobei sich 20 Leuchtdioden als optimal erwiesen haben. Um eine möglichst hohe Einkoppeleffizienz des von den weißen Leuchtdioden emittierten Lichts in den Lichtleiter zu erzielen hat es sich bewährt, wenn der Lichtleiter an zumindest einer Längsseite eine Lichteinkoppelfläche ausbildet, die eine Zylinderlinse ausbildet. Die Lichtquellen werden dann längs der Längsachse der Lichteinkoppelfläche bevorzugt gleichmäßig beabstandet angeordnet. Dabei kann die Formgebung der Lichteinkoppelfläche sowie die Orientierung der Lichtquellen an die Lichtabstrahlcharakteristik der Lichtquellen angepasst gewählt werden, was insbesondere bei der Verwendung von Leuchtdioden, die in der Regel eine asymmetrische Abstrahl charakteristik aufweisen, vorteilhaft ist.

Neben weißen Leuchtdioden sind eine Vielzahl weiterer Lichtquellen für eine Verwendung in der erfindungemäßen Beleuchtungseinrichtung, der erfindungsgemäßen Schildanordnung bzw. dem erfindungsgemäßen Halter für ein Kfz-Kennzeichenschild geeignet. Beispielhaft seien hier Kaltkathodenlampen, Glüh- bzw. Glimmlampen, Surface Mounted LED, andere Halbleiter- oder Polymerbasierte Lichtquellen sowie elektrolumineszierende Elemente genannt, wobei diese Aufzählung nicht anschließend ist.

In einer bevorzugten Weiterbildung werden weiße Leuchtdioden verwendet, deren Emitter unmittelbar in den Lichtleiter eingegossen sind. Auf diese Weise können die bei separat ausgebildeten Leuchtdioden sonst unvermeidlich auftretenden Lichteinkoppelverluste dramatisch verringert werden.

Die Beleuchtungseinrichtung der Schildanordnung weist eine Lichtauskoppeleinrichtung auf, die dazu vorgesehen ist, das im Lichtleiter geführte Licht gezielt lokal auszukoppeln. Insbesondere kann diese Lichtauskoppeleinrichtung so ausgestaltet sein, dass der lokale Auskoppelgrad in dem Maße ansteigt, in dem die Intensität des im Lichtleiter geführten Lichts abnimmt. In der Regel wird in einem solchen Fall der Auskoppelgrad der Lichtauskoppeleinrichtung im Wesentlichen proportional mit der Entfernung von der Lichteinkoppelfläche zunehmen.

Dabei wird die Lichtauskoppeleinrichtung von einer auf zumindest einer Oberfläche des Lichtleiters ausgebildeten Rauhigkeitsstruktur gebildet. Dabei weist die Rauhigkeitsstruktur bevorzugt Strukturgrößen im Bereich zwischen einem und 50 Mikrometern auf, bevorzugt zwischen 4 und 40 Mikrometern. Strukturengrößen von bis zu 500 nm sind ebenfalls möglich.

Entsprechende Strukturgrößen können bereits bei der Herstellung des Lichtleiters im Spritzgussverfahren aus einem hochtransparenten Kunststoff wie Polykarbonat oder PMMA eingebracht werden, beispielsweise indem eine Innenwandung der Spritzgussform gezielt mit einer entsprechenden Oberflächenrauhigkeit versehen wird. Alternativ kann eine Oberfläche des Lichtleiters nach seiner Herstellung mit einer Walze abgewalzt werden, deren Oberfläche eine entsprechende Oberflächenrauhigkeit aufweist oder es können z.B mittels Laserbestrahlung des Lichtleiters lichtstreuende Störstellen in den Lichtleiter eingebracht werden. Bei der Lasergestützten Erzeugung von Störstellen ist es insbeondere möglich, gezielt das Dichteprofil der Störstellen im Lichtleiter einzustellen, z.B. indem der Focus der Störstellenerzeugenden Laserstrahlung in eine geeignete Tiefe im Lichtleter gelegt wird.

Sowohl die Innenwandung einer z.B. metallischen Spritzgussform als auch die Oberfläche einer z.B. metallischen Walze können mit Hilfe eines Ätzprozesses mit einer entsprechenden Oberflächenrauhigkeit versehen werden, wobei die spezielle Verfahrensführung des Ätzprozesses die erzeugte Oberflächenstruktur, insbesondere die Strukturgröße bestimmt.

Alternativ können entsprechende Oberflächenstrukturen sowohl in der Spritzgussform als auch auf der Oberfläche der Walze durch eine mechanische Oberflächenbehandlung erzielt werden, beispielsweise durch Sand- oder Glasperlenstrahlen, wobei die chemische Oberflächenbehandlung bevorzugt ist. Wird die Oberflächenstruktur der Werkzeuge mittels chemischer Verfahren erzeugt, so weist der mit der Oberflächenstruktur versehene Lichtleiter in der Regel verbesserte optische Eigenschaften, insbesondere eine verbesserte Transparenz, gegenüber solchen Lichtleitern auf, die mit Werkzeugen bearbeitet wurden, die mittels mechanischer Methoden behandelt wurden.

In einem aus dem Stand der Technik bekannten alternativen Ansatz der nicht Gegenstand der Erfindung ist, wird der Lichtleiter mit Lichtstreuenden Partikeln dotiert, wobei sowohl eine homogene als auch eine inhomogene Dotierung des Lichtleiters möglich ist. Die mit Lichtstreuenden Partikeln dotierte Schicht des Lichtleiters bildet dann die erfindungsgemäße Lichtauskoppeleinrichtung. Durch geeignete Verfahrensführung bei der Herstellung des Lichtleiters ist es insbesondere möglich, ein inhomogenes Konzentrationsprofil der Lichtstreuenden Partikeln im Lichtleiter dergestalt zu erzeugen, dass an zumindest einer Oberfläche des Lichtleiters eine erhöhte Konzentration der Licht streuenden Partikel eingestellt ist. Besonders bevorzugt ist die Verwendung organischer Partikel als Lichtstreuende Partikel, alternativ können jedoch auch anorganische Partikel wie Siliziumdioxydpartikel verwendet werden. Es ist bekannt, dass die Größe der Lichtstreuenden Partikel für deren Lichtstreuende Eigenschaften, insbesondere für die Lichtstreucharakteristik verantwortlich ist. Entsprechend wird die Partikelgröße bevorzugt gezielt so ausgewählt, dass die gewünschten Lichtstreueigenschaften mit möglichst geringer negativer Beeinflussung der Retroreflexion und des Kontrastes erzielt werden. Geeignete Partikelgrößen liegen hier im Bereich von 500 Nanometern bis etwa 50 Mikrometern, wobei sich eine Partikelgröße im Bereich zwischen einem und 10 Mikrometern insbesondere im Zusammenhang mit organischen Lichtstreuenden Partikeln besonders bewährt hat.

Besonders bewährt hat es sich, nur eine Oberfläche des Lichtleiters der Beleuchtungseinrichtung mit einer Lichtauskoppeleinrichtung zu versehen, wobei diese bevorzugt an derjenigen Oberfläche des Lichtleiters angeordnet ist, die an der zum auszuleuchtenden Schild hin orientierten Seite des Lichtleiters liegt, da damit der Kontrast, d.h. die Lesbarkeit, des retroreflektierenden Kennzeichens verbessert wird..

Weitere Vorteile lassen sich realisieren, wenn zumindest eine Oberfläche des Lichtleiters der Beleuchtungseinrichtung reflektionsmindernd ausgestaltet ist, wobei sich aus praktischen Gründen eine Reflektionsmindernde Ausgestaltung derjenigen Oberfläche des Lichtleiters bewährt hat, die zum auszuleuchtenden Schild hin orientiert ist. Insbesondere kann eine solche Reflektionsmindernde Ausgestaltung erzielt werden, indem die reflektionsmindernd ausgestaltete Oberfläche des Lichtleiters mit Strukturen versehen wird, die im Bereich einiger Nanometer liegen. Entsprechende Strukturen haben ein Vorbild in der Natur und werden auch als "Mottenaugenstruktur" bezeichnet. Die Herstellung solcher Strukturen ist beispielsweise aus der deutschen Offenlegungsschrift DE 103 185 66 A1 bekannt, die einen Heißsiegelprozess einer Lichtleiteroberfläche offenbart.

Weiterhin ist aus der deutschen Offenlegungsschrift DE 100 20 877 A1 ein Spritzgussverfahren zur Herstellung eines Lichtleiters mit einer entsprechend reflektionsmindernd ausgestalteten Oberfläche bekannt. Beide vorveröffentlichte Dokumente werden durch diese Bezugnahme vollumfänglich in den Offenbarungsgehalt der vorliegenden Anmeldung einbezogen.

In der erfindungsgemäßen Schildanordnung ist diejenige Oberfläche des Lichtleiters, die vom auszuleuchtenden Schild weg orientiert ist, kratzfestigkeitserhöhend ausgestaltet.

Besteht der Lichtleiter aus einem polymeren Werkstoff wie PMMA, so sieht die Erfindung eine Überschichtung der Polymeroberfläche mit einem speziellen Kratzschutz auf polymerer Basis vor, wie es beispielsweise im Bereich der Kfz-Scheinwerfer-Herstellung bereits Stand der Technik in der Großserienfertigung ist. U.a. bietet hier die Fa. GE Bayer Silicone eine spezielle Kratzschutzversiegelung an, die unter der Produktbezeichnung SHC 5020 vertrieben wird. Diese Kratzschutzversiegelung wird in flüssiger Form auf die zu versiegelnde Oberfläche des polymeren Werkstücks aufgetragen und nachfolgend ausgehärtet. Diese Art des Kratzschutzes ist einer zusätzlichen Kratzschutzscheibe vorzuziehen, da hier die Retroreflexion des Kennzeichens durch eine geringere Anzahl von optischen Luft- Kunststoffübergängen weniger reduziert wird.

Ein vorteilhafter Halter für ein Kfz-Kennzeichenschild umfasst ein geschlossenes Gehäuse und eine darin angeordnete Beleuchtungseinrichtung. Ein vom Halter gehaltenes Kfz-Kennzeichenschild bildet zusammen mit der Beleuchtungseinrichtung eine erfindungsgemäße Schildanordnung aus. Die Beleuchtungseinrichtung umfasst eine oder mehrere Lichtquellen, deren Licht in einen flächenhaft ausgedehnten Lichtleiter eingekoppelt wird. Weiterhin ist das Gehäuse, welches vom Halter ausgebildet wird, dazu vorgesehen, ein zu haltendes Kfz-Kennzeichenschild aufzunehmen und zu umschließen. Der ausgedehnte Lichtleiter ist dabei vorderseitig des Kfz-Kennzeichenschilds angeordnet.

Weiter umfasst der Halter für ein Kfz-Kennzeichenschild gemäß der vorliegenden Erfindung eine rückwärtige Montageplatte, die zur Montage und zum Verbleib an einem Kfz vorgesehen ist, wobei für die Montage insbesondere eine Verschraubung in Frage kommt.

Weiterhin umfasst der Halter eine Kennzeichenschildeinheit, die ein geschlossenes Gehäuse zur z.B. gegen Feuchtigkeit abgedichteten Aufnahme der Beleuchtungseinrichtung und des Kfz-Kennzeichenschildes ausbildet. Diese Kennzeichenschildeinheit ist dazu eingerichtet, lösbar mit der rückwärtigen Montageplatte verbunden zu werden.

In einer alternativen Ausgestaltung kann die Kennzeichenschildeinheit so ausgebildet sein, dass sie nur unter Verwendung von Spezialeinheit oder auch überhaupt nicht mehr zerstörungsfrei von der Montageplatte gelöst werden kann.

Dies stellt eine deutliche Erhöhung der Diebstahlsicherheit dar.

In einer besonders vorteilhaften Weiterbildung des erfindungsgemäßen Halters bildet die Kennzeichenschildeinheit einen Rahmen aus, in den das zu haltende Kfz-Kennzeichenschild über eine Zutrittsöffnung eingelegt werden kann. Weiterhin ist ein Deckel vorgesehen, der Teil der Kennzeichenschildeinheit ist, wobei der Deckel dazu vorgesehen ist, die Zutrittsöffnung zum Rahmen nach Einlegen des zu haltenden Kfz-Kennzeichenschilds abdichtend zu verschließen.

Hier ergeben sich besondere Vorteile, wenn der Rahmen der Kennzeichenschildeinheit eine die Zutrittsöffnung umgreifende Dichtleiste ausbildet. Weiterhin bildet der Deckel vorteilhaft eine Aufnahmenut aus, die ebenfalls umlaufend ausgestaltet ist und dazu vorgesehen ist, die Dichtleiste des Rahmens in sich aufzunehmen. Dichtleiste und Aufnahmenut sind dergestalt komplementär ausgebildet, dass die Dichtleiste formschlüssig in die Aufnahmenut eingreifen kann. Hierdurch ergibt sich eine abgedichtete mechanische Verbindung zwischen dem Deckel und dem Rahmen der Kfz-Kennzeichenschildeinheit.

Besondere Vorteile ergeben sich, wenn der Rahmen aus einem oder mehreren spritzgießfähigen Thermoplasten wie beispielsweise ABS hergestellt ist. Der Deckel der Kennzeichenschildeinheit hingegen besteht vorteilhaft aus einem Kunststoff, der eine gegenüber den Thermoplasten des Rahmens erhöhte Elastizität aufweist. Als besonders geeignet hierfür haben sich aliphatische thermoplastische Polyurethane erwiesen.

In einer vorteilhaften Ausgestaltung des erfindungsgemäßen Halters ist der Rahmen der Kennzeichenschildeinheit zumindest zweiteilig aufgebaut und weist eine vorderseitig angeordnete Blende und einen rückseitig angeordneten Halter auf. Blende und Halter des einsatzfertig konfektionierten erfindungsgemäßen Halters sind dabei fest miteinander verbunden, insbesondere mittels Verschweißung. Vor der Verbindung von Blende und Halter wird zwischen beiden Teilen die Beleuchtungseinrichtung angeordnet, so dass die Beleuchfungseinrichtung bei der Herstellung der Verbindung zwischen Blende und Halter mechanisch im Rahmen festgelegt wird.

Besondere Vorteile bei der praktischen Verwendung des erfindungsgemäßen Halters ergeben sich, wenn die Kennzeichenschildeinheit lösbar mit der Montageplatte verbunden werden kann. Besonders vorteilhaft ist es, wenn die mechanische Verbindung zwischen Kennzeichenschildeinheit und Montageplatte nur mittels Werkzeug gelöst werden kann, um einen spontanen Diebstahl zu unterbinden. Hierzu können in der Kennzeichenschildeinheit eine oder mehrere Zutrittsöffnungen ausgebildet werden, durch die Werkzeug zur Lösung im Inneren des erfindungsgemäßen Halters vorgesehener Verriegelungselemente eingeführt werden kann.

Schließlich können besondere Vorteile realisiert werden, wenn der flächenhaft ausgedehnte Lichtleiter, welcher in der Kennzeichenschildeinheit angeordnet ist, oberseitig von einer zusäklichen transparenten, vorzugsweise mechanisch hoch belastbaren Kratzschutzscheibe wie oben beschrieben abgedeckt ist. Diese Schutzscheibe wird dabei vorteilhaft so oberhalb des Lichtleiters angeordnet, dass ein Übertritt des im Lichtleiter geführten Lichts in die Schutzscheibe vermieden wird. Auf diese Weise können durch erhöhte Auskopplung verursachte unerwünschte "Lichthofeffekte" um Beschädigungen, die im praktischen Einsatz des erfindungsgemäßen Halters unvermeidlich in der Schutzscheibe auftreten, sicher vermieden werden. Wird die transparente Schutzscheibe zusätzlich oberseitig hartvergütet, so kann einerseits die Reflektivität der vorderen Eintrittsfläche des erfindungsgemäßen Halters deutlich vermindert werden, andererseits kann die mechanische Belastbarkeit, hier insbesondere die Kratzfestigkeit der transparenten Schutzscheibe nochmals deutlich erhöht, sowie die Retroreflexion des retroreflektierenden Kennzeichens positiv beeinflusst werden.

Weitere Merkmale und Vorteile des Halters ergeben sich aus den Unteransprüchen sowie dem Ausführungsbeispiel, welches nunmehr anhand der Zeichnung näher erläutert wird. Das Ausführungsbeispiel soll den Fachmann in die Lage versetzen, den Halter praktisch zu realisieren und ist nur beispielhaft und nicht einschränkend zu verstehen. In der Zeichnung zeigen:

Fig. 1    zeigt eine perspektivische Teilschnittansicht eines erfindungsgemäßen Halters mit gehaltertem retroreflektierendem Kfz-Kennzeichenschild,

Fig. 2    eine vergrößerte Ansicht des Schnitts durch den erfindungsgemäßen Hal- ters aus Fig. 1,

Fig. 3    eine Teilschnittansicht durch den unteren Rand des erfindungsgemäßen Halters aus Fig. 1,

Fig. 4    eine Teilschnittansicht durch den oberen Rand des erfindungsgemäßen Halters aus Fig. 1.,

Fig. 5    eine perspektivische Teilansicht der Montageplatte des erfindungsgemä- ßen Halters aus Fig. 1 in Draufsicht,

Fig. 6    ein vergrößerter Ausschnitt aus Fig. 5,

Fig. 7    eine unterseitige Ansicht der Montageplatte aus Fig. 5 und

Fig. 8    eine vergrößerte Teilansicht des Lichtleiters des erfindungsgemäßen Hal- ters aus Fig. 1, aufgesetzt auf ein zu haltendes Kfz-Kennzeichenschild.

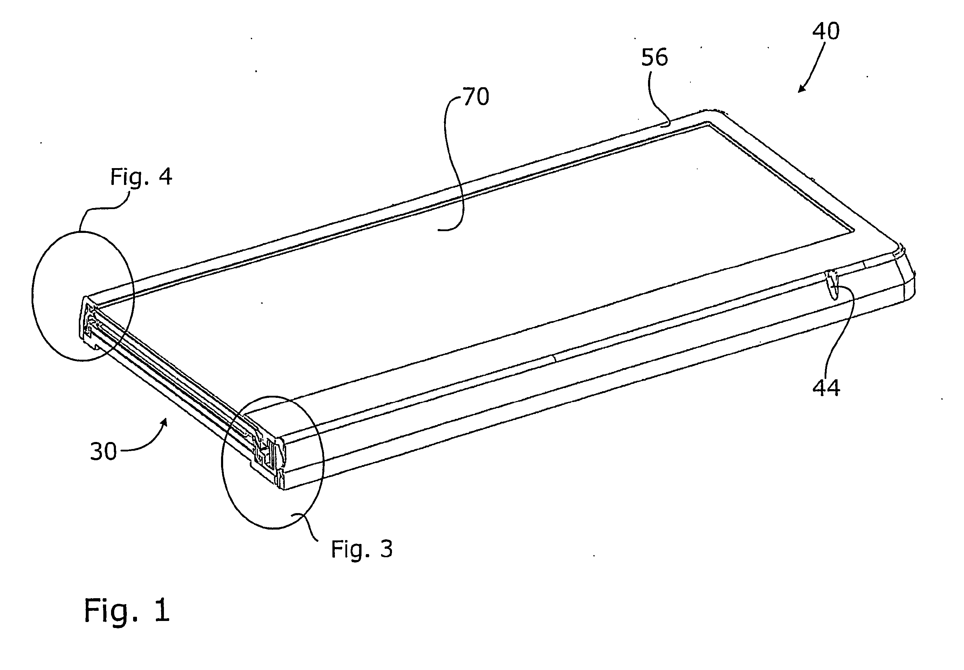

Figur 1 zeigt eine Teilschnittansicht durch einen erfindungsgemäßen Halter 1 für ein Kfz-Kennzeichenschild 2 in perspektivischer Darstellung. Der erfindungsgemäße Halter 1 weist eine unterseitige Montageplatte 30 auf, die beispielsweise im Spritzgussverfahren aus einem schlagzähen Thermoplasten wie ABS hergestellt werden kann. Mit der rückwärtigen Montageplatte 30, die zur Montage an einem Kfz vorgesehen ist und auf deren Aufbau im folgenden noch weiter eingegangen werden wird, ist oberseitig eine Kennzeichenschildeinheit 40 angeordnet, die unverlierbar mit der Montageplatte 30 verbunden ist, wobei die Verbindung zwischen der Montageplatte 30 und der Kennzeichenschildeinheit 40 mittels Werkzeug beschädigungsfrei gelöst werden kann. Innerhalb der Kennzeichenschildeinheit 40, welche ein geschlossenes Gehäuse 10 ausbildet, ist ein Kennzeichenschild 2 gehaltert.

Das Gehäuse 10 wird dabei oberhalb des gehalterten Kfz-Kennzeichenschilds 2 von einer oberseitig angeordneten Schutzscheibe 70 abgedeckt, welche mittels Verkleben oder Verschweißen mit der vorderseitigen Blende 56, die Teil eines Rahmens 50 der Kennzeichenschildeinheit 40 ist, verbunden ist. Die vorderseitige Blende 56 besteht ebenfalls aus einem schlagzähen thermoplastischen Kunststoff wie ABS und kann beispielsweise mittels Spritzguss gefertigt werden. Die Schutzscheibe 70 besteht bevorzugt aus einem transparenten schlagzähen Kunststoff. Bevorzugt kommt hier aufgrund der hohen Transparenz und der hohen mechanischen Belastbarkeit Polycarbonat zum Einsatz. Denkbar ist jedoch auch die Verwendung von anderen transparenten Kunststoffen wie beispielsweise Polyethylen.

Zusätzlich kann die Vorderfläche der Schutzscheibe 70 durch Aufbringung einer harten und entspiegelnd wirkenden dünnen Schicht hartvergütet sein, wodurch die Kratzfestigkeit der Schutzscheibe 70 erhöht und gleichzeitig ihre Reflektivität herabgesetzt werden kann, was die Lesbarkeit der Kennzeichenlegende des darunter liegenden Kfz-Kennzeichenschild deutlich erhöht.

Weiterhin sind in der vorderseitigen Blende 56 des Rahmens 50 Montageöffnungen 44 vorgesehen, die eine Einführung von Werkzeug erlauben und auf diese Weise eine Trennung von rückseitiger Montageplatte 30 und vorderseitiger Kennzeichenschildeinheit 40 erlauben, worauf im folgenden ebenfalls noch genauer eingegangen wird.

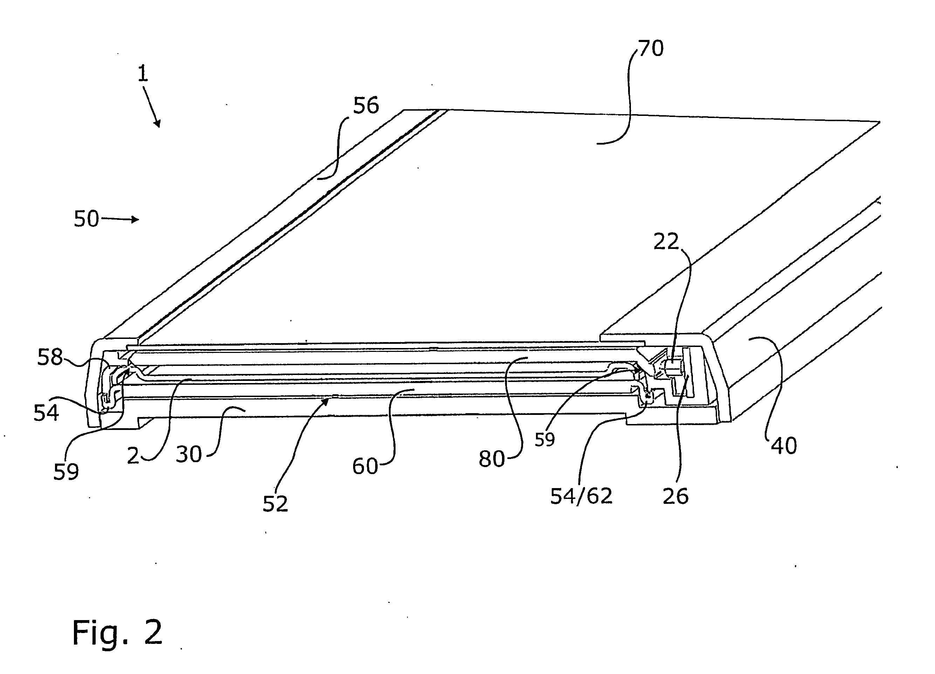

Figur 2 zeigt nun vergrößert eines Ausschnitt des aus Figur 1 ersichtlichen Schnitts durch den erfindungsgemäßen Halter 1, aus dem der Aufbau des erfindungsgemäßen Halters 1 genauer ersichtlich wird. Der erfindungsgemäße Halter 1 umfasst die rückwärtige Montageplatte 30, welche unverlierbar aber lösbar mit der oberseitig angeordneten Kennzeichenschildeinheit 40 verbunden ist.

Die Kennzeichenschildeinheit 40 bildet ein Gehäuse 10 aus, in welchem eine Beleuchtungseinrichtung 20 sowie das zu haltende bzw. zu beleuchtende Kfz-Kennzeichenschild 2 angeordnet ist. Bei dem zu haltenden Kfz-Kennzeichenschild 2 handelt es sich vorzugsweise um ein Kfz-Kennzeichenschild mit metallischer Platine, insbesondere mit geprägter metallischer Platine, bei welchem die Legende in Form erhaben geprägter Ziffern eingebracht ist. Die Beleuchtungseinrichtung 20 umfasst eine Mehrzahl von Lichtquellen 22, welche von einem gemeinsamen Lichtquellenträger 26 getragen werden und gleichmäßig beabstandet angeordnet sind. Bei den Lichtquellen 22 handelt es sich bevorzugt um Weißlicht-Leuchtdioden (LED), welche mit einer niedrigen Betriebsspannung arbeiten und eine hohe optische Ausgangsleistung aufweisen. Diese sind gegenwärtig von einer Mehrzahl von Anbietern erhältlich und weisen den Vorteil einer homogenen Strahlungscharakteristik bei einer hohen Lebensdauer auf. Der hohe Wirkungsgrad von LED führt darüber hinaus zu einer nur geringen Wärmeentwicklung.

Als LED werden bevorzugt weiße Hochleistungs-LED verwendet, die eine Lichtleistung von 1000 mcd und darüber aufweisen. Die Fa. Oshino Lamps GmbH, Nürnberg, Deutschland, bietet unter der Produktbezeichnung SUW 30030 weiße Hochleistungs-LED an, die eine Lichtleistung von typ. 4000 mcd bei einem Abstrahlwinkel von 30° aufweisen. Die Verwendung von bis zu 20 LED des genannten Typs führt im Zusammenhang mit dem erfindungsgemäßen Halter bzw. der Schildanordnung zu guten Ergebnissen.

Die Mehrzahl der Lichtquellen 22 der Beleuchtungseinrichtung 20 ist dabei in einer Längsseite der Kennzeichenschildeinheit 40 angeordnet, wobei die Strahlrichtung der einzelnen Lichtquellen 22 mit der Ebene des Kfz-Kennzeichenschilds 2 zusammenfällt.

Die Lichtquellen 22 werden über eine gemeinsame Versorgungsleitung mit elektrischer Energie versorgt, wobei die hier nicht dargestellte Versorgungsleitung über eine abgedichtete Bohrung aus der Kennzeichenschildeinheit 40 herausgeführt wird.

Zur gleichmäßigen Ausleuchtung des gehaltenen Kfz-Kennzeichenschilds 2 ist oberseitig des Kfz-Kennzeichenschilds 2 ein flächenhaft ausgedehnter Lichtleiter 80 angeordnet, welcher beabstandet vom Kfz-Kennzeichenschild 2 angeordnet ist. In diesen Lichtleiter 80, welcher vorzugsweise aus einem transparenten Kunststoff wie beispielsweise Polycarbonat besteht, wird das von den Lichtquellen 22 ausgesandte Licht auf geeignete Weise eingekoppelt. Auch hierauf wird im Folgenden noch genauer eingegangen. Im Lichtleiter 80 wird das eingekoppelte Licht der Lichtquellen 22 durch innere Totalreflektion geführt. Dabei ist die Oberflächenbeschaffenheit auf seiner oberseitigen Fläche so beschaffen, dass bei jeder internen Totalreflektion ein geringer Prozentsatz der einfallenden Strahlung ausgekoppelt wird. Entsprechende Techniken hierzu sind aus dem Stand der Technik in großer Zahl bekannt. Beispielhaft sei hier die gezielte Einbringung einer Oberflächenrauhigkeit in den Lichtleiter 80 genannt, welche beispielsweise mittels einer geeigneten Matrize bei der Herstellung des Lichtleiters 80 mittels Spritzguss eingebracht werden kann. Durch geeignete Strukturierung der Oberflächenrauhigkeit ist es weiterhin möglich, die längs des Lichtwegs stetig abnehmende Lichtintensität durch Erhöhung des lokalen Auskoppelgrades zu kompensieren, so dass sich insgesamt eine homogene Intensität des oberseitig aus dem Lichtleiters 80 ausgekoppelten Lichts ergibt. Weiterhin ist es möglich, durch gezielte Strukturierung der Oberfläche des Lichtleiters 80 in den an die Lichtquellen 22 angrenzenden Bereichen die im Bereich der Lichtquellen 22 stark erhöhte Intensität im Lichtleiter 80 auszugleichen, indem dort der Auskoppelgrad lokal deutlich abgesenkt wird.

Grundsätzlich ist aber auch möglich, auf eine inhomogene Ausgestaltung des Auskoppelgrads zu verzichten und den Auskoppelgrad über die gesamte Fläche des Lichtleiters im Wesentlichen homogen einzustellen, solange die geltenden Vorschriften der ECE-4 bezuglich der Homogenität der Ausleuchtung des Kennzeichens erfüllt werden.

Das Gehäuse 10 der Kennzeichenschildeinheit 40 wird im gezeigten Ausführungsbeispiel aus mehreren Komponenten gebildet. Ein Rahmen 50, welcher eine vorderseitige Blende 56 sowie einen rückseitigen Halter 58 umfasst, die als separate Teile gefertigt werden und im Rahmen der Erstellung des erfindungsgemäßen Halters 1 unlösbar miteinander verbunden werden, beispielsweise-mittels Verschweißung, weisen eine vorderseitige Öffnung aus, in die die transparente Schutzscheibe 70 eingesetzt ist. Die transparente Schutzscheibe 70 ist dabei wie bereits erwähnt, unlösbar mit der vorderseitigen Blende 56 des Rahmens 50 verbunden, beispielsweise mittels Verklebung. Im gezeigten Ausführungsbeispiel sind die vorderseitige Blende 56 sowie der rückseitige Halter 58 jeweils mittels Tiefziehverfahren oder Spritzgussverfahren hergestellt und bestehen jeweils aus einem schlagzähen thermoplastischen Kunststoff wie beispielsweise ABS.

Der Rahmen 50 der Kennzeichenschildeinheit 40 weist rückseitig eine Zutrittsöffnung 52 auf, die sich über die gesamte rückwärtige Fläche des Rahmens 50 erstreckt und deren Abmessungen so bemessen sind, dass durch die Zutrittsöffnung 52 das zu haltende retroreflektierende Kfz-Kennzeichenschild 2 in den Rahmen 50 eingelegt werden kann. Wird das Kfz-Kennzeichenschild eingelegte, so gelangt es in Kontakt mit Andruckflächen 59, welche im rückseitigen Halter 58 ausgebildet sind.

Nachdem das Kfz-Kennzeichenschild 2 in den Rahmen 50 eingelegt wurde, wird die Kennzeichenschildeinheit 40 mittels eines Deckels 60 hermetisch verschlossen. Hierzu weist der rückseitige Halter 58 eine umlaufende Dichtleiste 54 auf. Gleichzeitig bildet der Deckel 60 eine umlaufende Aufnahmenut 62 aus, welche in ihrer Formgebung komplementär zur umlaufenden Dichtleiste 54 ausgebildet ist. Das Material des Deckels 60 weist nun eine gegenüber dem Material des Rahmens 50 erhöhte Elastizität auf, wobei die Abmessungen des Deckels 60, hier insbesondere der umlaufenden Aufnahmenut 62, so bemessen sind, dass der Deckel 60 mit seiner umlaufenden Aufnahmenut 62 auf die Dichtleiste 54 des rückseitigen Halters 58 aufgezogen werden kann. Hierbei erfährt der Deckel 60 eine gewisse elastische Dehnung, wodurch der Deckel 60 auf der umlaufenden Dichtleiste 54 festgelegt wird. Als Material für den Deckel 60 haben sich thermoplastische Polyurethane, beispielsweise das von der Firma Bayer Materialscience AG unter der Marke Desmopan ® vertriebene thermoplastische aliphatische Polyurethan bewährt. Dieses weist gegenüber ABS eine erhöhte Elastizität auf, so dass der Deckel 60 in der von Kunststoffboxen aus dem Lebensmittelbereich bekannten Art und Weise auf die Dichtleiste 54 des Rahmens 50 aufgezogen werden kann, wobei sich ein abdichtender Sitz der Dichtleiste 54 in der Aufnahmenut 62 ergibt. Hierdurch wird das von der Kennzeichenschildeinheit 40 ausgebildete Gehäuse 10 durch den Deckel 60 abgedichtet verschlossen.

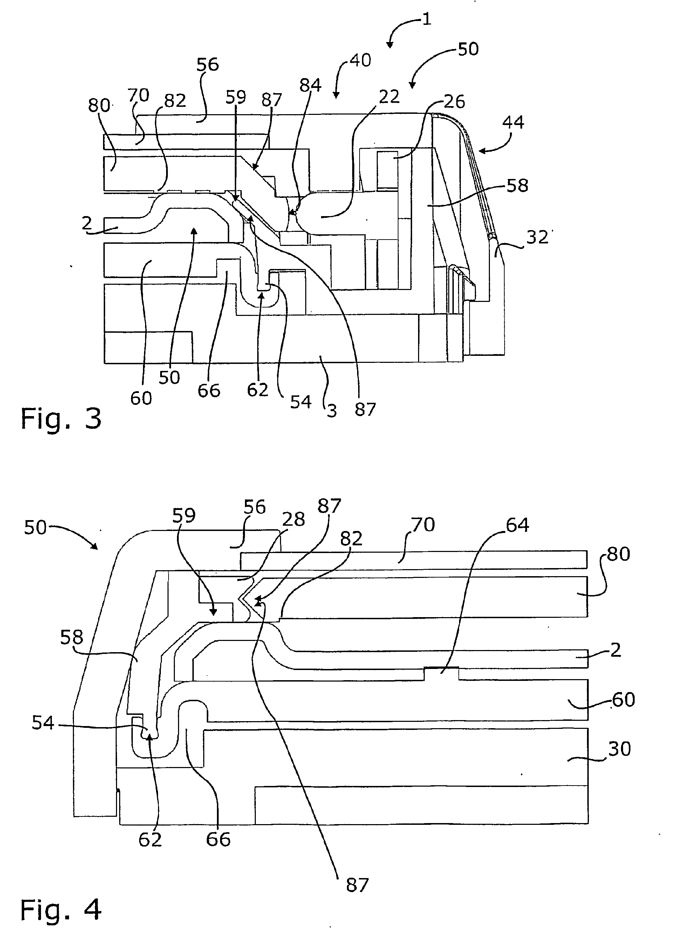

Figur 3 zeigt nun den aus Figur 2 ersichtlichen rechten Rand der Kennzeichenschildeinheit 40 nochmals vergrößert. Deutlich zu erkennen ist der zweiteilige Aufbau des Rahmens 50, welcher aus einer vorderseitigen Blende 56 und dem rückseitigen Halter 58 gebildet ist. Die vorderseitige Blende 56 bildet eine Ausnehmung aus, in die die Schutzscheibe 70 eingesetzt ist.

Der rückseitige Halter 58 bildet gemeinschaftlich mit der vorderseitigen Blende 56 eine Aufnahme für die Mehrzahl der Lichtquellen 22 und den Lichtquellenträger 26 aus. Werden die vorderseitige Blende 56 und der rückseitige Halter 58 zusammengefügt, so werden hierdurch der Lichtquellenträger 56 und die Lichtquellen 26 fixiert.

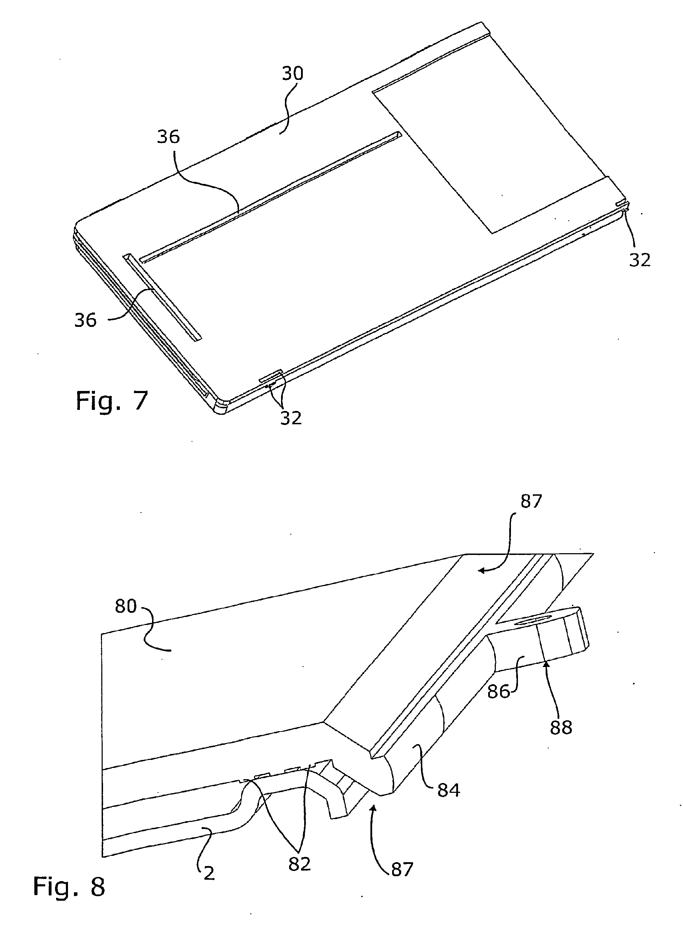

Weiterhin bildet der Lichtleiter 80 an seinen Längsseiten Befestigungsarme 86 aus, die aus Figur 8 zu ersehen sind. In diesen Befestigungsarmen 86 sind Durchgangslöcher 88 ausgebildet, durch die Stifte, welche in der vorderseitigen Blende 56 oder im rückseitigen Halter 58 ausgebildet sind und die in den Figuren nicht dargestellt sind, hindurch greifen können. Zum Zusammenfügen des Rahmens 50 wird der Lichtleiter 80 daher (nach Einkleben der Schutzscheibe 70) mit den Durchgangsbohrungen 88 der Befestigungsarme 86 auf die Stifte der vorderseitigen Blende 56 aufgesetzt. Nachfolgend wird die Beleuchtungseinrichtung 20 mit dem Lichtquellenträger 26, auf der die Mehrzahl von Lichtquellen 22 angeordnet ist, in die vorderseitige Blende 56 eingesetzt. Nachfolgend wird auf die Rückseite der vorderseitigen Blende 56 der rückseitige Halter 58 aufgesetzt und mit der vorderseitigen Blende 56 verschweißt. Hierdurch werden sowohl der Lichtleiter 80 als auch die Beleuchtungseinrichtung 20 im Rahmen 50 festgelegt, insbesondere unverlierbar mit diesem verbunden.

Der Lichtleiter 80 bildet randseitig eine Einkoppelfläche 84 aus, deren Oberflächengeometrie optimal auf die Einkopplung des von den Lichtquellen 22 emittierten Licht abgestimmt ist. Weiterhin bildet der Lichtleiter 80 Reflektionsflächen 87 aus, die so gegen den Lichtweg des im Lichtleiter 80 propagierenden Lichts geneigt sind, dass das Licht stets interne Totalreflektion erfährt und somit im Lichtleiter 80 geführt wird.

Weiterhin ist die Geometrie des Rahmens 50, insbesondere des Lichtleiters 80, so bemessen, dass bei zusammengefügtem Rahmen 50 ein Luftspalt zwischen der vorderseitigen Schutzscheibe 70 und dem Lichtleiter 80 verbleibt, so dass eine Auskopplung des im Lichtleiter 80 geführten Lichts durch eine Einkopplung in die Schutzscheibe 70 möglichst vermieden wird. Indem eine separate Schutzscheibe 70 vorgesehen wird, welche selbst nicht als Lichtleiter der Beleuchtungseinrichtung 20 fungiert, kann eine unerwünschte verstärkte Auskopplung von Licht aus dem Lichtleiter 80 aufgrund von mechanischen Beschädigungen der vorderseitigen Lichtaustrittsfläche des erfindungsgemäßen Halters 1 weitgehend vermieden werden. Würde auf die Schutzscheibe 70 verzichtet, so würden im praktischen Betrieb des erfindungsgemäßen Halters auftretende mechanische Beschädigungen der Oberfläche des Lichtleiters 80 unvermeidlich zur lokalen Änderungen des Auskoppelgrads und somit zu der Ausbildung von "Lichthöfen", insgesamt also zu einer inhomogenen Leuchtverteilung über die Lichtaustrittsfläche des erfindungsgemäßen Halters führen.

Rückseitig bildet der rückseitige Halter 58 Andruckflächen 59 aus. An diesen Andruckflächen 59, kommt ein Kfz-Kennzeichenschild 2, welches vom erfindungsgemäßen Halter 1 gehalten werden soll, zur Anlage, wenn das Kfz-Kennzeichenschild 2 in den Rahmen 50 der Kennzeichenschildeinheit 40 eingelegt wird. Gleichzeitig kommt es zur Anlage mit einer Mehrzahl von Andruckleisten 82, die im Lichtleiter 80 ausgebildet sind.

Ist das zu haltende Kennzeichenschild 2 rückseitig in die Kennzeichenschildeinheit 40 durch die in der Kennzeichenschildeinheit 40 ausgebildete Zutrittsöffnung 52 eingelegt, die sich im gezeigten Ausführungsbeispiel praktisch über die gesamte rückwärtige Fläche des rückseitigen Halters 58 erstreckt, so wird die Zutrittsöffnung 52 des Rahmens 50 mittels eines Deckels 60 hermetisch verschlossen. Hierzu bildet der rückseitige Halter 58 wie bereits erwähnt eine umlaufende Dichtleiste 54 auf. Weiterhin bildet der Deckel 60 eine umlaufende Aufnahmenut 62 aus. Die Formgebung der Dichtleiste 54 und der Aufnahmenut 62 sind dabei so aneinander angepasst, dass sich ein Formschluss zwischen Dichtleiste 54 und Aufnahmenut 62 ergibt, wenn der Deckel 60 rückseitig auf den Rahmen 50 aufgesetzt wird.

Die Abmessungen der Andruckflächen 59 im rückseitigen Halter 58 sowie des Deckels 60 sind so bemessen, dass ein zu haltendes Kfz-Kennzeichenschild 2, welches vorbestimmten nationalen Zulassungsvorschriften entspricht, vorderseitig zur Anlage gelangt an den Andruckleisten 82 des Lichtleiters 80 sowie an den Andruckflächen 59 des rückseitigen Halters 58. Rückseitig gelangt das zu haltende Kfz-Kennzeichenschild 2 zur Anlage an die Innenseite des Deckels 60, auf der insbesondere zusätzlich Andrucknoppen 64, wie sie aus Figur 4 ersichtlich sind, vorgesehen sein können.

Nach Zusammenfügen der vorstehend beschriebenen Komponenten ist die Kennzeichenschildeinheit 40 des erfindungsgemäßen Kennzeichenhalters 1 betriebsbereit.

Die nunmehr fertig gestellte Kennzeichenschildeinheit 40 mit eingesetztem Kfz-Kennzeichen 2 kann nunmehr mit der (beispielsweise mittels Verschraubung fest mit einem Kfz verbundenen) Montageplatte 30 verbunden werden. Für eine solche Verbindung mit dem Kfz sind der in der Montageplatte 30 eine Vielzahl von Montagedurchbrüchen 34 vorgesehen, die bei der Herstellung der Montageplatte 30 mit eingeformt worden sind. Fertigungstechnisch ist es von Vorteil, wenn diese Montagedurchbrüche 34 bei der Fertigung noch nicht vollständig durchbrochen werden.

Zur Befestigung der Kennzeichenschildeinheit an der Montageplatte 30 ist im gezeigten Ausführungsbeispiel an der Montageplatte 30 eine Mehrzahl von Haltevorsprüngen 33 ausgebildet. Diese sind als federnde Zungen ausgestaltet. Weiterhin ist in der Innenseite der vorderseitigen Blende 56 ein umlaufender Verriegelungsvorsprung 57 ausgebildet. Die Haltevorsprünge 32 bildet nach außen gerichtete Nasen aus, welche bei einem Aufstecken der Kennzeichenschildeinheit 40 auf die Montageplatte 30 in Eingriff mit dem umlaufenden Verriegelungsvorsprung 57 gelangen und federnd einrasten. Auf diese Weise wird eine feste Verbindung .zwischen der Kennzeichenschildeinheit 40 und der Montageplatte 30 realisiert.

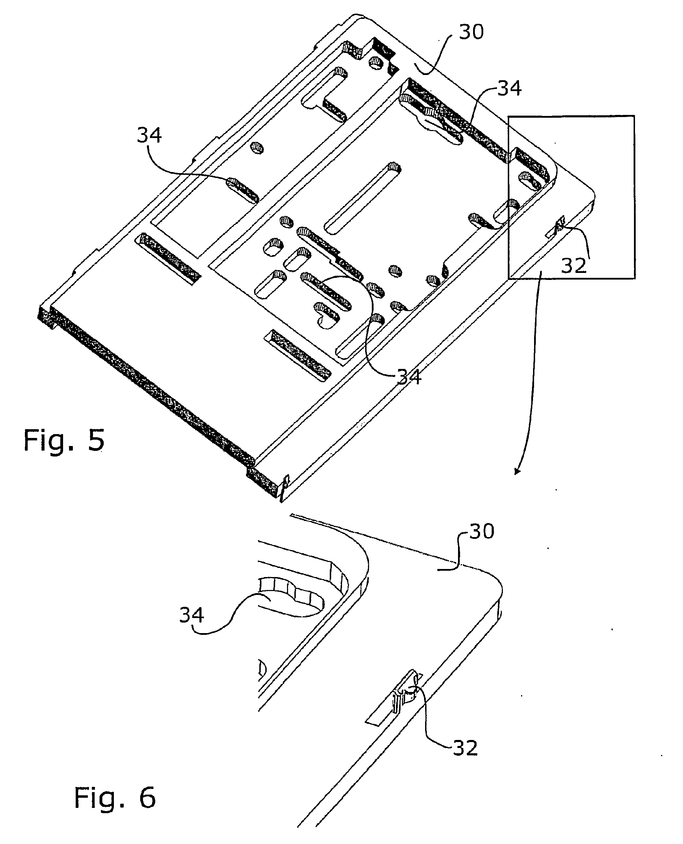

Zur Lösung dieser mechanischen Verbindung sind in der vorderseitigen Blende 56 eine Mehrzahl von Demontageöffnungen 44 ausgebildet, die beispielsweise aus den Figuren 1 und 3 ersichtlich sind. Durch diese Demontageöffnungen 44 kann ein geeignetes Werkzeug eingeführt werden, mit dessen Hilfe die federnden Haltevorsprünge 32 von dem Verriegelungsvorsprung 57 gelöst werden können, sodass die Kennzeichenschildeinheit 40 nach vorne abgezogen werden kann. Die Anordnung der Haltevorsprünge 32 an der Montageplatte 30 ist beispielsweise aus den Figuren 5 und 7 sowie aus Figur 6 zu entnehmen, aus Figur 6 insbesondere in vergrößerter Darstellung.

Figur 4 zeigt nun die in Figur 2 links gelegene Längsseite des erfindungsgemäßen Halters 1 in vergrößerter Darstellung im Schnitt. Im gezeigten Ausführungsbeispiel ist auf dieser Seite der Kennzeichenschildeinheit 40 keine weitere Beleuchtungseinrichtung 20 vorgesehen. Vielmehr ist hier das Ende des Lichtleiters 80 als Retroreflektor ausgebildet, indem zwei unter dem Grenzwinkel der Totalreflexion relativ zum Lichtweg im Lichtleiter 80 die angeordnete Reflektionsflächen 87 ausgebildet sind. Das im Lichtleiter 80 propagierende Licht wird bei Auftreffen auf diese beiden endseitigen Reflektionsflächen 87 um 180° umgelenkt, so dass auf diese Weise die Effizienz der Beleuchtungseinrichtung 20 erhöht wird. Das Ende des Lichtleiters 80 mit den beiden Reflektionsflächen 87 greift in eine komplementär ausgebildete Führungsschiene 28 ein, die mit dem rückseitigen Halter 58 verbunden oder einstückig mit diesem ausgebildet sein kann.

Aus Figur 4 ist ersichtlich, dass der Deckel 60 Andrucknoppen 64 ausbilden kann, welche ebenfalls dazu dienen, dass zu haltende Kfz-Kennzeichenschild gegen die Andruckflächen 59 des rückseitigen Halters 58 zu pressen. Weiterhin ist zu ersehen, dass längs der äußeren Umrandung des Deckels 60 angrenzend an die umlaufende Aufnahmenut 62 eine Fertigungsausnehmung 66 eingearbeitet ist. Diese Fertigungsausnehmung 66 vereinfacht die Herstellung des Deckels 60 im Spritzgussverfahren.

Figur 7 zeigt eine rückwärtige Ansicht eines Abschnitts der Montageplatte 30 des Halters 1 gemäß des Ausführungsbeispiels. In der Rückseite der Montageplatte 30 sind Kabelführungen 36 ausgebildet, die dazu dienen, die elektrische Versorgungsleitung der Beleuchtungseinrichtung 20 geschützt vor Zugriffen von Außen einer Verbindung mit dem elektrischen Bordnetz des Kraftfahrzeuges zuzuführen.

Figur 8 zeigt schließlich einen vergrößerten Schnitt durch den Lichtleiter 80 des erfindungsgemäßen Halters gemäß dem Ausführungsbeispiel. Deutlich zu erkennen ist die zylindrisch ausgebildete Einkoppelfläche 84, die den Austrittsflächen der als Lichtquellen (22) dienen den LED gegen über an liegend angeordnet ist. Von dieser Ankoppelfläche 84 erhebt sich eine Mehrzahl von Befestigungs armen 86.

Von denen hier nur einer dargestellt ist, und wie bereits erwähnt mit ihrer Durchgangsbohrung 88 dazu dienen, den Lichtleiter 80 mechanisch fest mit dem Rahmen 50 zu verbinden. Weiterhin zu erkennen sind die stets unter einem Winkel gegenüber dem Lichtweg im Lichtleiter 80 angeordneten Reflektionsflächen 87, der größer ist als der Grenzwinkel der totalen Reflektion für das im Lichtleiter 80 propagierende Licht. Schließlich sind die rückseitig am Lichtleiter 80 ausgebildeten Andruckleisten 82 zu erkennen, über die sich das in den Rahmen eingelegte Kfz-Kennzeichenschild 2 am Lichtleiter 80 abstützt.

Die vorliegende Erfindung realisiert einen Halter für ein Kfz-Kennzeichenschild, welcher eine effektive und homogene Ausleuchtung eines (nicht-transparenten) Kennzeichenschilds erlaubt. Der Halter ist für eine Fertigung in Großserie geeignet und weist eine hohe Dichtheit gegenüber Umwelteinflüssen auf. Mechanische Beschädigungen der vorderseitig angeordneten Lichtaustrittsfläche haben auf die Homogenität der Ausleuchtung des gehaltenen Kfz-Kennzeichenschilds praktisch keinen Einfluss.

Der Halter für ein Kfz-Kennzeichenschild umfasst eine Beleuchtungseinrichtung, welche gemeinschaftlich mit einem vom Halter gehaltenen retroreflektierenden Schild, insbesondere einem Kfz-Kennzeichenschild, eine erfindungsgemäße Schildanordnung darstellt. Im Folgenden werden zwei Ausführungsbeispiele für einen Lichtleiter einer Beleuchtungseinrichtung für eine Schildanordnung näher beschrieben, von denen das zweite erfindungsgemäß ist.

In einem ersten Ausführungsbeispiel gemäß dem Stand der Technik besteht der Lichtleiter aus PMMA und ist mit organischen Lichtstreuenden Mitteln dotiert. Als geeignetes PMMA-Material hat sich das unter der Produktbezeichnung 8 N Glasklar von der Firma Röhm GmbH, Darmstadt, Deutschland angebotene Material, besonders bewährt. Dieses kann mit dem unter der Bezeichnung 8 N DF 20 vom selben Hersteller angebotene Material vermischt werden, welches organische Lichtstreuende Partikel enthält. Ein Mischungsverhältnis von 2% des Materials 8 N DF 20 im Verhältnis zu 98% des Materials 8 N Glasklar hat sich bei einer Dicke des Lichtleiters von 2,5 mm als optimal erwiesen. Ein solcher Lichtleiter eignet sich insbesondere zur Verwendung mit einem Standardkennzeichen gemäß der geltenden deutschen Zulassungsvorschriften, welches eine Retroreflexion von etwa 60 Candela pro Lux und Quadratmeter aufweist. Der auf die beschriebene Weise hergestellte Lichtleiter weist eine Transmission auf, die eine Gesamt-Retroreflexion der erfindungsgemäßen Schildanordnung von etwa 40 Candela pro Lux und Quadratmetern oder darüber erlaubt.

Wird hingegen auf retroreflektierende Schilder zurückgegriffen, die eine deutlich höhere Retroreflexion als die gegenwärtig in Deutschland zugelassenen retroreflektierenden Kennzeichen aufweisen, so kann die Dotierung des Lichtleiters ohne weiteres erhöht werden. Beispiele für solche Schilder sind Schilder, die mit einer Retroreflexionsfolie ausgestattet sind, die mikroprismatische Elemente enthält, wie sie z.B. aus der DE 69904512 der 3M Corp., USA, bekannt ist. Die erhöhte Dotierung des Lichtleiters mit lichtstreuenden Partikeln senkt zwar dessen lineare Transmission, was die Retroreflexion insgesamt vermindert. Dies ist aufgrund der extrem hohen retroreflexionswerte der mikroprismatischen Reflexionsfolien in der Regel vollkommen unproblematisch. Unter Umständen kann sogar eine Reduktion der sehr hohen Retroreflexion dieser Folien zwingend erforderlich sein, um eine Verwendung einer Erfindungsgemäßen Schildanordnung für ein Kfz-Kennzeichenschild überhaupt erst zulässig zu machen.

Im Gegenzug kann durch die Erhöhung des Auskoppelgrads jedoch die Ausleuchtung des Kennzeichnes verbessert werden, wodurch es insbesondere möglich werden kann, die Zahl oder Lichtstärke der verwendeten Lichtquellen abzusenken, woduch sich z.B.Kostenvorteile ergeben können.

Bevorzugt ist jedoch auch hier eine Retroreflexion in Höhe von mindestens 40 Candela pro Lux und Quadratmeter. Der Lichtleiter mit der angegebenen Materialzusammensetzung weist bereits solche Lichtauskoppeleigenschaften auf, dass bei der Verwendung von 20 LED des Typs SUW 30030 der Firma Oshino Lamps GmbH die erfindungsgemäße Ausleuchtung in Höhe von mindestens 2,5 Candela pro Quadratmeter der erfindungsgemäßen Schildanordnung erzielt wird.

Die optischen Eigenschaften der Beleuchtungseinrichtung werden vorteilhaft so eingestellt, dass der Kontrast K zwischen dem retrorflektierenden Hintergrund und der schwarz eingefärbten Legende des auszuleuchtenden Kennseichens, der durch die folgende Gleichung gegeben ist:

$$K = (Imax-Imin)/(Imax+Imin)$$

nicht unter 1:3 absinkt, insbesondere nicht unter 1:10 und bevorzugt nicht unter 1:15. Hierzu ist auf eine nicht zu stark verminderte Transmission des Lichtleiters der Beleuchtungseinrichtung zu achten, wobei auch hier bei einer hohen Retroreflexion des Schilds eine stärker verminderte Transmission tolerierbar ist.

Aus den vorstehend diskutierten Ausführungsbeispielen wird deutlich, dass die Eigenschaften der Beleuchtungseinrichtung auf die Eigenschaften des auszuleuchtenden Kennzeichens abgestimmt werden können bzw. müssen, wodurch im Umkehrschluss auch eine Einbeziehung der Eigenschaften des retrtoreflektierenden Schilds in den erfindungsgemäßen Optimierungsprozess möglich ist.

Weitere Vorteile können sich ergeben, wenn die lichtstreuenden Partikel nicht homogen im Lichtleiter verteilt sind, sondern ein Konzentrationsprofil eingestellt wird, in dem die Partikelkonzentration im Bereich der Oberflächen des Lichtleiters, zumindest an einer Oberfläche des Lichtleiters, deutlich gegenüber dem Volumenmaterial erhöht ist. Eine solche inhomogene Partikelkonzentration lässt sich bei geeigneter Verfahrensführung bei der Herstellung des Lichtleiters realisieren, beispielsweise durch Überschichten einer Monolage lichtstreuender Partikel, die auf einer Unterlage angeordnet sind, mit einem glasklaren Polymermaterial.

Insgesamt soll die Transmission der Beleuchtungseinrichtung der erfindungsgemäßen Schildanordnung nebst der Reflektionsverluste beim Durchtritt durch die Oberflächen des Lichtleiters der Beleuchtungseinrichtung zumindest 25% betragen, bevorzugt jedoch mindestens 50% und insbesondere über 75%. Grundsätzlich nimmt die Lesbarkeit der Legende des ausgeleuchteten Schilds mit zunehmender Transmission der Beleuchtungseinrichtung, hier insbesondere des Lichtleiters, zu, so dass hohe Transmissionsgrade des Lichtleitersubstrates insgesamt bevorzugt sind.

Im zweiten Ausführungsbeispiel, welches die Erfindung bettrift, wird die Lichtauskoppeleinrichtung der Schildanordnung 100 von einer auf der Oberfläche des Lichtleiters ausgebildeten Rauhigkeitsstruktur gebildet. Eine solche Rauhigkeitsstruktur kann auf vielfältige Weise in die Oberfläche des Lichtleiters eingebracht werden, insbesondere durch unmittelbare mechanische oder chemische Bearbeitung der Oberfläche des fertig gestellten Lichtleiters. Beispielhaft hierfür sei das Abwalzen bzw. Prägen der Lichtleiteroberfläche mit einer beheizten Walze genannt, wobei die Walze ihrerseits mit einer geeigneten Oberflächenstruktur selbst versehen ist. Eine solche Oberflächenstruktur, deren dominante Strukturgröße bevorzugt im Bereich zwischen 0,5 und 50 Mikrometern liegt, kann beispielsweise mittels mechanischer Bearbeitung der Walzenoberfläche wie z.B. durch Sandstrahlen erzeugt werden. Verbesserte optische Eigenschaften des abgewalzten Lichtleiters lassen sich erzielen, wenn die Oberflächenstruktur der Walze durch eine chemische Behandlung beispielsweise mittels eines Ätzprozesses erzeugt wird, wobei die Oberflächenstrukturen wiederum in der angegebenen Größenordnung liegen. Denkbar ist jedoch auch eine unmittelbare chemische Behandlung der Lichtleiteroberfläche beispielsweise mittels eines Ätzprozesses, um Oberflächenstrukturen in der genannten Größenordnung zu erzeugen.

Bevorzugt wird die Strukturierung der Lichtleiteroberfläche nicht homogen ausgeführt. Vielmehr wird der Auskoppelgrad der Lichtauskoppeleinrichtung gezielt lokal so eingestellt, dass insgesamt eine homogene Ausleuchtung des gehaltenen Schilds erzielt wird. Der Auskoppelgrad kann lokal beispielsweise durch Variation der dominanten Wellenlänge bzw. Strukturtiefe der Rauhigkeitsstruktur eingestellt werden. Auch kann die Rauhigkeitsstruktur selbst nur in bestimmten Bereichen der Lichtleiteroberfläche eingebracht werden, wogegen andere Oberflächenabschnitte des Lichtleiters unbehandelt bleiben.

Neben der nachträglichen Anbringung der für die Ausbildung der Lichtauskoppeleinrichtung benötigten Rauhigkeitsstrukturen an zumindest einer Oberfläche des fertig konfektionierten Lichtleiters ist es auch möglich, die Rauhigkeitsstruktur bereits bei der Herstellung des Lichtleiters in die Lichtleiteroberfläche einzuformen. Hierzu ist es beispielsweise möglich, eine Oberfläche einer für die Lichtleiterherstellung verwendeten Spritzgussform gezielt mit einer Oberflächenrauhigkeit zu versehen, die dann in den Lichtleiter eingeformt wird. Auch hier kann die erforderliche Oberflächenstruktur durch eine mechanische oder chemische Behandlung der Innenwandung der Spritzgussform erzielt werden, wobei sich wiederum eine chemische Behandlung der Innenwandung als vorteilhaft für die optischen Eigenschaften, insbesondere den erreichbaren Transmissionsgrad des in der Spritzgussform erzeugten Lichtleiters erwiesen hat. Alternativ ist es möglich, in die Spritzgussform eine separat ausgebildete Matrix einzulegen, die eine geeignete Oberflächenstrukturierung aufweist und die bei der Herstellung des Lichtleiters in dessen Oberfläche abgeformt wird.

Ein mögliches Herstellungsverfahren für einen Lichtleiter zur Realisierung einer erfindungsgemäßen Schildanordnung kann daher die folgenden Verfahrensschritte aufweisen:

    1. Erzeugung eines Lichtleiters mit planen Oberflächen beispielsweise im Spritzgussverfahren aus einem transparenten polymeren Werkstoff,

    2. Behandlung zumindest einer Oberfläche des fertig gestellten Lichtleiters zur Einbringung einer Rauhigkeitsstruktur mit Strukturgrößen, die im Bereich zwischen 500 Nanometern und 50 Mikrometern liegen, bevorzugt im Bereich zwischen 4 und 40 Mikrometer, wobei hierzu zumindest eine Oberfläche des Lichtleiters mechanisch oder chemisch behandelt wird.

Ein alternatives Herstellungsverfahren umfasst die folgenden Verfahrensschritte:

    1. Bereitstellen einer Spritzgussform zur Herstellung eines Lichtleiters, welcher zumindest eine Oberfläche aufweist, die eine Rauhigkeitsstruktur umfasst, welche Strukturgrößen im Bereich zwischen 500 Nanometern und 50 Mikrometern, bevorzugt zwischen 4 Mikrometern und 40 Mikrometern aufweist, wobei zumindest eine Innenwandung der Spritzgussform eine komplementäre Rauhigkeitsstruktur mit entsprechenden Strukturgrößen aufweist, und

    2. Herstellen des Lichtleiters im Spritzgussverfahren unter Verwendung der bereitgestellten Spritzgussform.

Abschließend sei darauf hingewiesen, dass sich verschiedene Verfahren zur gezielten Auskopplung von Licht aus dem Lichtleiter miteinander kombinieren lassen. So können ohne weiteres mit lichtstrenenden Partikeln dotierte Lichtleiter zusätzlich gezielt auf Ihrer Oberfläche mit einer Rauhigkeitsstruktur versehen werden. Auch die gezielte Erzeugung von lichtstreuenden Fehlstellen im Lichtleiter mittels Laserbestrahlung sowie andere hier nicht genannte Techniken, mit denen sich die Auskopplung aus einem Lichtleiter steuern lässt, sind hier grundsätzlich geeignet und können mit den hier genannten Verfahren kombiniert werden. Durch Kombination dieser Techniken lässt sich ein Optimum einstellen bezüglich Leuchtdichte, Kontrast/Lesbarkeit und Retroreflexion, wobei dies im Anwendungsfall eines Kfz-Kennzeichenschilds gemäß der länderspezifischen Vorschriften einstellen lässt

Besondere Vorteile ergeben sich, wenn eine erfindungsgemäße Schildanordnung 100 zur Ausleuchtung eines Kfz-Kennzeichenschilds verwendet werden, ohne dass ein am Äußeren des Kraftfahrzeugs angebrachter Halter zum Halten des retroreflektierenden Kfz-Kennzeichenschilds Verwendung findet. In diesem Fall wird die Beleuchtungseinrichtung bzw. die Schildanordnung in einem in ein Bauteil eines Kraftfahrzeugs integrierten Halter für ein Kfz-Kennzeichenschild verwendet. Dabei kann es sich bei diesem Bauteil des Kfz z.B. um einen Stoßfänger, einen Kofferraumdeckel oder eine Motorhaube handeln. Dies erlaubt eine Integration des gesetzlich vorgeschriebenen Kfz-Kennzeichenschilds in das Design des Kraftfahrzeugs, wodurch eine verbesserte Gestaltungsfreiheit für die Karosserie des Kfz und insgesamt eine aufgewertete Gestaltung realisiert werden kann. Zusätzlich kann die Diebstahlsicherheit des Kennzeichens verbessert werden, da der in das Bauteil des Kfz integrierte Halter ohne weiteres so ausgestaltet werden kann, dass das Kennzeichen nur noch vom Kfz-Innenraum zugänglich ist.

**Bezugzeichen**

| 1 | Halter für Kfz-Kennzeichenschild |
|---|---|
| 2 | Kfz-Kennzeichenschild |
| 10 | Gehäuse |
| 20 | Beleuchtungseinrichtung |
| 22 | Lichtquelle |
| 26 | Lichtquellenträger |
| 28 | Führungsschiene |
| 30 | Montageplatte |
| 32 | Haltevorsprung |
| 34 | Montagedurchbruch |
| 36 | Kabelführung |
| 40 | Kennzeichenschildeinheit |
| 42 | Halteausnehmung |
| 44 | Demontageöffnung |
| 50 | Rahmen |
| 52 | Zutrittsöffnung |
| 54 | Dichtleiste |
| 56 | vorderseitige Blende |
| 57 | Verriegelungsvorrichtung |
| 58 | rückseitiger Halter |
| 59 | Andruckfläche |
| 60 | Deckel |
| 62 | Aufnahmenut |
| 64 | Andrucknoppe |
| 66 | Fertigungsausnehmung |
| 70 | Schutzscheibe |
| 80 | Lichtleiter |
| 82 | Andruckleiste |
| 84 | Einkoppelfläche |
| 86 | Befestigungsarm |
| 87 | Reflektionsfläche |
| 88 | Durchgangsbohrung |
| 100 | Schildanordnung |

**Patentansprüche**

1. Schildanordnung (100) bestehend aus einem Schild (2) mit einer Legende und einer Beleuchtungseinrichtung (20), wobei die Beleuchtungseinrichtung (20) einen flächenhaft ausgedehnten Lichtleiter (80) umfasst, der vorderseitig des auszuleuchtenden retroreflektierenden Schilds (2) angeordnet und dazu vorgesehen ist, das retroreflektierende Schild (2) durch Auskopplung von im Lichtleiter (80) geführtem Licht homogen auszuleuchten, **dadurch gekennzeichnet, dass**

a. das Schild einen retroreflektierenden Hintergrund aufweist,
b. die vom auszuleuchtenden Schild (2) weg orientierte Oberfläche des Lichtleiters (80) gegenüber der unbedeckten Oberfläche des Lichtleiters (80) durch Überschichtung mit einem Kratzschutz auf polymerer Basis Kratzfestigkeitserhöhend ausgestaltet ist, und
c. die Beleuchtungseinrichtung (20) eine Lichtauskoppeleinrichtung aufweist, die an einer Oberfläche des Lichtleiters (80) angeordnet und dazu vorgesehen ist, im Lichtleiter (80) geführtes Licht gezielt lokal auszukoppeln, wobei die Lichtauskoppeleinrichtung als Rauhigkeitsstruktur mit Strukturgrößen zwischen 0,5 und 50 Mikrometern ausgebildet ist, wobei die Beleuchtungseinrichtung (20) so ausgebildet ist, dass

i. die durch die Ausleuchtung des retroreflektierenden Schilds (2) erzielte Abstrahlung der Schildanordnung (100) mindestens 2 Candela pro Quadratmeter beträgt,
ii. die Retroreflektivität des retroreflektierenden Schilds (2) durch die Beleuchtungseinrichtung (20) um maximal 60 %, bevorzugt um nicht mehr als 30% reduziert wird, so dass die Retroreflektivität der Schildanordnung (100) mindestens 20 Candela pro Lux und Quadratmeter beträgt, und
iii. der Kontrast K zwischen dem Hintergrund und der Legende des Schilds (2) nicht unter 1:3 absinkt.

2. Schildanordnung (100) gemäß Anspruch 1, **dadurch gekennzeichnet, dass** die Rauhigkeitsstruktur bei der Herstellung des Lichtleiters (80) im Spritzgussverfahren durch Verwendung einer Spritzgussform, die eine Innenoberfläche mit kontrollierter Oberflächenrauhigkeit aufweist, erzeugt wird.

3. Schildanordnung (100) gemäß Anspruch 1, **dadurch gekennzeichnet, dass** die Rauhigkeitsstruktur bei der Herstellung des Lichtleiters (80) durch Abwalzen einer Oberfläche des Lichtleiters (80) mit einer Walze, die eine Oberfläche mit kontrollierter Oberflächenrauhigkeit aufweist, erzeugt wird.

4. Schildanordnung (100) gemäß Anspruch 2 oder 3, **dadurch gekennzeichnet, dass** die Oberflächenrauhigkeit der Innenoberfläche der Spritzgussform bzw. der Walze mittels eines Ätzprozesses erzeugt wird.

5. Schildanordnung (100) gemäß Anspruch 1, **dadurch gekennzeichnet, dass** die Beleuchtungseinrichtung (20) eine oder mehrere weiße Lichtquellen (22) umfasst, die längs einer vom Lichtleiter (20) ausgebildeten Lichteinkoppelfläche (84) angeordnet sind.

6. Schildanordnung (100) gemäß Anspruch 5, **dadurch gekennzeichnet, dass** die weißen Lichtquellen (22) von weißen Leuchtdioden gebildet werden.

7. Schildanordnung (100) gemäß Anspruch 5, **dadurch gekennzeichnet, dass** die Lichtquellen (22) in den Lichtleiter (20) eingegossen sind.

8. Schildanordnung (100) gemäß Anspruch 1, **dadurch gekennzeichnet, dass** die Lichtauskoppeleinrichtung zur Erzielung einer homogenen Ausleuchtung des auszuleuchtenden Schilds (2) eine lokal variierende Auskoppelstärke aufweist.

9. Schildanordnung (100) gemäß Anspruch 1, **dadurch gekennzeichnet, dass** die zum auszuleuchtenden Schild (2) hin orientierte Oberfläche des Lichtleiters (80) und / oder die vom auszuleuchtenden Schild (2) weg orientierte Oberfläche des Lichtleiters (80) Reflexionsmindernd ausgestaltet ist.

10. Schildanordnung (100) gemäß Anspruch 1, **dadurch gekennzeichnet, dass** für die Reflexionsmindernde Ausgestaltung der Oberfläche des Lichtleiters (80) Strukturen mit Abmessungen im Bereich einiger Nanometer vorgesehen sind.

11. Verwendung einer Schildanordnung (100) gemäß Anspruch 1 in einem in ein Bauteil eines Kraftfahrzeugs integrierten Halter für ein Kfz-Kennzeichenschild.

12. Verwendung gemäß Anspruch 11, **dadurch gekennzeichnet, dass** es sich bei dem Bauteil des Kfz um einen Stoßfänger, einen Kofferraumdeckel oder eine Motorhaube handelt.

**Claims**

1. A plate arrangement (100) consisting of a plate (2) with a legend and with a lighting device (20), said lighting device (20) incorporating a planar light guide (80) that is disposed on the front side of the retro-reflective plate (2) to be lightened up and that Is provided for homogeneously lighting up said retro-reflective plate (2) by outcoupling light carried in said light guide (80), **characterized in that**

   a. said plate comprises a retro-reflective background,
   b. In contrast to the uncovered surface of the light guide (80), the surface of the light guide (80) turned away from the plate (2) to be lightened up is devised so as to Increase the scratch resistance by coating It with a scratch protection on polymer base, and
   c. the lighting device (20) comprises a light outcoupling device that is disposed on a surface of said light guide (80) and that is provided to selectively and locally outcouple light carried in the light guide (80), said light outcoupling device as a roughness structure being configured with structure sizes ranging between 0.5 and 50 micrometers, said lighting device (20) being configured such that

      i. the radiation of the plate arrangement (100) obtained by lightening up the retro-reflective plate (2) is at least 2 candela per square meter,
      ii. the retro-reflectiveness of the retro-reflective plate (2) is reduced by no more than 60 %, preferably by no more than 30 %, by the lighting device (20) so that the retro-reflectiveness of the plate arrangement (100) is at least 20 candela per lux per square meter, and
      iii. the contrast K between the background and the legend of the plate (2) will not drop below 1:3.

2. The plate arrangement (100) as set forth in claim 1, **characterized in that** the roughness structure is produced by injection moulding while manufacturing the light guide (80), using an injection mould comprising an Inner surface with controlled surface roughness.

3. The plate arrangement (100) as set forth in claim 1, **characterized in that** the roughness structure is produced while manufacturing the light guide (80) by rolling a surface of the light guide (80) with a roll that comprises a surface with controlled surface roughness.

4. The plate arrangement (100) as set forth in claim 2 or 3, **characterized in that** the surface roughness of the inner surface of the injection mould or of the roll is produced by etching.

5. The plate arrangement (100) as set forth in claim 1, **characterized in that** the lighting device (20) incorporates one or more white light sources (22) that are disposed alongside a light incoupling surface (84) formed by the light guide (80).

6. The plate arrangement (100) as set forth in claim 5, **characterized in that** the white light sources (22) are formed from white light-emitting diodes.

**7.** The plate arrangement (100) as set forth in claim 5, **characterized in that** the light sources (22) are cast in the light guide (80).

**8.** The plate arrangement (100) as set forth in claim 1, **characterized in that** the light outcoupling device comprises a locally varying outcoupling intensity in order to achieve homogeneous lighting up of the plate (2) to be lightened up.

**9.** The plate arrangement (100) as set forth in claim 1, **characterized in that** the surface of the light guide (80) that is turned toward the plate (2) to be lightened up and/or the surface of the light guide (80) that is turned away from the plate (2) to be lightened up is devised to minimize reflection.

**10.** The plate arrangement (100) as set forth in claim 1, **characterized in that** structures with dimensions in the range of some nanometers are provided for devising the surface of the light guide (80) so as to minimize reflection.

**11.** Use of a plate arrangement (100) as set forth in claim 1 in a holder for a license plate Integrated in a component part of an automotive vehicle.

**12.** Use as set forth in claim 11, **characterized in that** the component part of the automotive vehicle is a bumper, a boot lid or an engine hood.

**Revendications**

**1.** Ensemble de plaque (100) se composant d'une plaque (2) ayant une légende et d'un dispositif d'éclairage (20), ledit dispositif d'éclairage (20) comprenant un guide de lumière (80) s'étendant suivant une surface qui est disposé sur la face avant de la plaque rétro-réfléchissante à éclairer (2) et qui est prévu pour éclairer de manière homogène ladite plaque rétro-réfléchissante (2) en découplant de la lumière guidée dans ledit guide de lumière (80), **caractérisé par le fait que**

    a. ladite plaque présente un fond rétro-réfléchissant,
    b. la surface du guide de lumière (80) qui est orientée dans la direction opposée à la plaque à éclairer (2) est réalisée de manière à augmenter la résistance aux rayures par rapport à la surface découverte du guide de lumière (80), et ceci en la revêtant d'un revêtement antl-rayure à base polymérique,
    c. ledit dispositif d'éclairage (20) présente un dispositif de découplage de lumière qui est disposé sur une surface du guide de lumière (80) et prévu pour découpler localement d'une manière ciblée de la lumière guidée dans ledit guide de lumière (80), ledit dispositif de découplage de lumière, en tant que structure de rugosité, étant réalisé de manière à présenter des dimensions structurelles comprises entre 0,5 et 50 micromètres, de sorte que

    i. le rayonnement de l'ensemble de plaque (100), qui est obtenu par l'éclairage de la plaque rétro-réfléchissante (2) est d'au moins 2 candelas par mètre carré,
    ii. la rétro-réflectivité de la plaque rétro-réfléchlssante (2) est réduite de 60 % au maximum, de préférence d'une valeur n'excédant pas 30 %, par le dispositif d'éclairage (20), de sorte que la rétro-réflectivité de l'ensemble de plaque (100) est d'au moins 20 candelas par lux et mètre carré, et que
    iii. le contraste K entre le fond et la légende de la plaque (2) ne passe pas au-dessous de 1 : 3.

**2.** Ensemble de plaque (100) selon la revendication 1, **caractérisé par le fait que**, lors de la fabrication du guide de lumière (80), la structure de rugosité est réalisée suivant la méthode de moulage par injection en utilisant un moule à injection qui présente une surface intérieure à rugosité contrôlée de surface.

**3.** Ensemble de plaque (100) selon la revendication 1, **caractérisé par le fait que**, lors de la fabrication du guide de lumière (80), la structure de rugosité est réalisée en faisant passer un rouleau sur une surface du guide de lumière (80), qui présente une surface à rugosité contrôlée de surface.

**4.** Ensemble de plaque (100) selon la revendication 2 ou 3, **caractérisé par le fait que** la rugosité de surface de la surface intérieure du moule à injection ou bien du rouleau est réalisée par un processus de gravure.

**5.** Ensemble de plaque (100) selon la revendication 1, **caractérisé par le fait que** ledit dispositif d'éclairage (20) comprend une ou une pluralité de sources de lumière blanche (22) qui sont arrangées le long d'une face de couplage de lumière (84) réalisée par ledit guide de lumière (80).

**6.** Ensemble de plaque (100) selon la revendication 5, **caractérisé par le fait que** lesdites sources de lumière blanche (22) sont formées par des diodes électroluminescentes blanches.

**7.** Ensemble de plaque (100) selon la revendication 5, **caractérisé par le fait que** lesdites sources de lumière (22) sont coulées dans ledit guide de lumière (20).

**8.** Ensemble de plaque (100) selon la revendication 1, **caractérisé par le fait que**, en vue d'obtenir un éclairement homogène de la plaque à éclairer (2), ledit dispositif de découplage de lumière présente une Intensité de découplage variant localement.

**9.** Ensemble de plaque (100) selon la revendication 1, **caractérisé par le fait que** la surface du guide de lumière (80) qui est orientée vers la plaque à éclairer (2) et/ou la surface du guide de lumière (80) qui est orientée dans la direction opposée à la plaque à éclairer (2) est réalisée de manière à réduire la réflexion.

**10.** Ensemble de plaque (100) selon la revendication 1, **caractérisé par le fait que**, pour réaliser la surface du guide de lumière (80) de manière à réduire la réflexion, on prévoit des structures présentant des dimensions situées dans une plage de quelques nanomètres.

**11.** Utilisation d'un ensemble de plaque (100) selon la revendication 1, dans un support pour une plaque d'immatriculation de véhicule, qui est intégré à un composant d'un véhicule automobile.

**12.** Utilisation selon la revendication 11, **caractérisé par le fait que** ledit composant du véhicule automobile est un pare-chocs, un couvercle de coffre ou un capot-moteur.

Fig. 4

70

40

56

44

30

Fig. 3

Fig. 1

EP 1 807 720 B1

Fig. 2

EP 1 807 720 B1

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10258465 A1
- WO 0116223 A
- US 2004241393 A1
- EP 0809225 A1
- US 2003174865 A1
- US 20040066659 A1
- US 20050036083 A1
- DE 10318566 A1
- DE 10020877 A1
- DE 69904512